# EUROPÄISCHE PATENTANMELDUNG

(11) **EP 0 728 807 A1**
(43) Veröffentlichungstag der Anmeldung: **28.08.1996**
(21) Anmeldenummer: 96890017.5
(22) Anmeldetag: 06.02.1996
(51) Int. Cl.: C08L 21/00, B60C 1/00

(54) **Kautschukmischung**

(30) Priorität: 27.02.1995 AT 345/95
(71) Anmelder: Semperit Reifen Aktiengesellschaft, A-2514 Traiskirchen (AT)
(72) Erfinder: Loreth, Wolfgang, Dr. Dipl.-Ing., D-31867 Lauenau (DE); Du Bois, André, Dr., D-30657 Hannover (DE); Beckmann, Otto, Dr., D-30169 Hannover (DE); Teves, Reinhard, Dr., D-30926 Seelze (DE); Leitner, Anton, A-2500 Baden (AT)
(74) Vertreter: Vinazzer, Edith, Dipl.-Ing.

(57) **Zusammenfassung**

Kautschukmischung für den Laufstreifen eines Reifens, insbesondere eines Winterreifens, welche Mischung Keratin in Form von Fasern oder Pulver enthält.

## Beschreibung

Die vorliegende Erfindung betrifft eine Kautschukmischung für den Laufstreifen eines Reifens, insbesondere eines Winterreifens. Die Erfindung betrifft ferner einen Reifen mit einem Laufstreifen, der zumindest zum Teil aus dieser Kautschukmischung hergestellt ist.

Bei der Entwicklung von Laufstreifenmischungen für Fahrzeugluftreifen, die für den Einsatz unter winterlichen Fahrbedingungen besonders geeignet sind, steht es im Vordergrund, die Wintereigenschaften, wie beispielsweise das Traktionsverhalten des Reifens und die Bremseigenschaften auf schneeigem und eisigem Untergrund oder den Naßgriff ständig zu verbessern. Auch die Senkung des Rollwiderstandes, welcher ja unmittelbar Einfluß nimmt auf den Kraftstoffverbrauch des Fahrzeuges, ist ein wichtiges Entwicklungsziel. Zudem gewinnt der Einsatz von möglichst umweltverträglichen Materialien in Kautschukmischungen zunehmend an Bedeutung.

Bei aus dem Stand der Technik bekannten Kautschukmischungen für Laufstreifen von Reifen, die unter winterlichen Fahrbedingungen gut einsetzbar sein sollen, werden einerseits spezielle Polymere oder Polymerverschnitte, andererseits auch bestimmte Weichmacher, beispielsweise Esterweichmacher verwendet, die dazu beitragen, die Winterfahreigenschaften zu verbessern. Zum bekannten Einsatz von umweltverträglichen Materialien ist insbesondere der Einsatz von Rapsöl in Laufstreifenmischungen zu erwähnen.

Aus der DE-A 40 05 493 ist es ferner bekannt, einer Kautschukmischung, die für Winterlaufstreifen vorgesehen ist. Lederpulver oder Gelatinepulver beizumengen. Gelatine ist eine wasserlösliche Substanz, die in eine Kautschukmischung schwierig einzuarbeiten ist und als nicht kautschukfreundlich einzustufen ist Leder besitzt einen gewissen Wassergehalt, ist ein hydrophiles Material und wasserquellbar und somit ebenfalls wenig kautschukfreundlich. Sowohl Gelatine als auch Leder lösen sich relativ leicht aus der Oberfläche von Reifenlaufstreifen, was deren Abriebsbeständigkeit verschlechtert.

Die Erfindung hat sich nun die Aufgabe gestellt, eine Kautschukmischung für den Laufstreifen eines Reifens bereitzustellen, die sehr gute Wintereigenschaften, insbesondere sehr gute Griffeigenschaften garantiert, auf Umweltverträglichkeit Bedacht nimmt und andere Reifeneigenschaften, wie beispielsweise Abriebsverhalten oder Rollwiderstand, nicht negativ beeinflußt.

Gelöst wird die gestellte Aufgabe erfindungsgemäß dadurch, daß der Kautschukmischung Keratin in Form von Fasern oder Pulver beigemengt ist.

Keratin ist nicht nur eine ökologisch einwandfreie Substanz sondern auch, im Gegensatz zu Gelatine oder Leder, ein hydrophobes Material, welches vom Kautschuk sehr gut benetzt wird und somit ausgesprochen kautschukfreundlich ist. Überraschenderweise wurde nun festgestellt, daß Keratin als hydrophobes Material in der Lage ist, die Wintereigenschaften einer Laufstreifenmischung, insbesondere die Griffeigenschaften, wie beispielsweise Traktion auf Schnee und Bremsen auf Schnee und Eis, signifikant zu verbessern. Diese positiven Effekte könnten auf eine nicht näher bekannte Wechselwirkung Kautschuk/Keratin zurückzuführen sein. Dabei dürfte auch eine Rolle spielen, daß das Keratin dem Laufstreifen eine Heterogenität verleiht, die eine gewisse Mikrorauhigkeit der Laufstreifenoberfläche bewirkt, die sich ebenfalls auf die Griffeigenschaften günstig auswirkt. Zudem wurde festgestellt, daß ein Laufstreifen aus einer erfindungsgemäßen Kautschukmischung eine gute Abriebsbeständigkeit zeigt und den Rollwiderstand senkt.

Die geschilderten positiven Effekte von Keratin sind insbesondere dann gegeben, wenn dieses in einer Menge von 1 bis 30, insbesondere von 3 bis 25 Gewichtsteilen, bezogen auf 100 Gewichtsteile Kautschuk in der Mischung, beigemengt wird.

Gemäß einer bevorzugten Ausführungsform der Erfindung werden als Keratinfasern Wollfasern, Haare, insbesondere Tierhaare, oder Tierborsten beigemengt. Dabei handelt es sich vorteilhafterweise um in der Natur vorkommende, in ausreichenden Mengen zur Verfügung stehende und preisgünstige Materialien. Schafwolle oder Schweineborsten haben sich als gut geeignete Materialien erwiesen.

Es können der Kautschukmischung auch Keratinfasern beigemengt werden, die aus natürlichen Keratinen, beispielsweise Woll- und Haarfasern, durch Verspinnen nach dem Naßspinnverfahren hergestellt sind. Solche Keratinfasern sind grundsätzlich bekannt und bieten den Vorteil, daß sie in einem kleineren Durchmesser hergestellt werden können, als jener der oben erwähnten natürlichen Substanzen ist. Derartige Keratinfasern können daher etwas feiner in der Kautschukmischung verteilt werden, was sich wiederum günstig auf sämtliche erzielbaren und schon erwähnten Effekte auswirkt.

Die Keratinfasern werden dabei bevorzugt in einer Länge von 0,5 bis 120 mm, insbesondere bis 100 mm, der Kautschukmischung beigemengt, was eine gute Verarbeitbarkeit der Mischung gewährleistet. In der fertigen Mischung selbst können die Fasern, vor allem beim Einsatz von Fasern größerer Länge, durch den Mischprozeß zerteilt werden, was jedoch keinen negativen Einfluß auf die Eigenschaften der Kautschukmischung nimmt.

Dabei können Fasern gleicher Art oder auch unterschiedlicher Art beigemengt werden. Ein Faserdurchmesser von < 400 µm hat sich für die Verarbeitbarkeit der Mischung als besonders vorteilhaft erwiesen.

Bei einer weiteren möglichen Ausführungsvariante der Erfindung wird Keratin in Pulverform, insbesondere Hornmehl, verwendet. Auch dieses Material wird vorteilhafterweise von der Natur in ausreichender Menge zur Verfügung gestellt und ist ebenfalls kostengünstig.

Hornmehl besitzt im allgemeinen keine einheitliche Teilchengröße und läßt sich in die Mischung dann problemlos einarbeiten, wenn seine Teilchengröße zwischen 50 bis 1500 µm beträgt. Auch Hornmehl von zumindest im wesentlichen einheitlicher Teilchengröße kann verwendet werden.

Die vorliegende Erfindung betrifft ferner einen Reifen, dessen Laufstreifen zumindest zum Teil aus der vulkanisierten erfindungsgemäßen Kautschukmischung besteht.

Die Erfindung wird nun anhand von Ausführungsbeispielen, die in der nachfolgenden Tabelle 1 zusammengefaßt sind, näher beschrieben.

Die Tabelle enthält Mischungsbeispiele, wobei die angegebenen Zahlenwerte Gewichtsteile sind, die auf 100 Gewichtsteile Kautschuk in der Mischung bezogen sind.

Aus allen Mischungsrezepturen wurden Laborproben erstellt und einigen Labortests unterzogen. Folgende Meßverfahren wurden dabei angewandt:
Shore Härte: Gemäß DIN-Norm 53505, jeweils bei Raumtemperatur (RT), bei 70°C und im Kälteschrank bei -10°C.

### Rückprallelastizität: gemäß DIN 53512

E' (-20°C) (dynamischer Speichermodul) und tan delta bei 10°C: Gemessen an einem "Eplexor" der Firma Gadum (Frequenz 10 Hz, kraftkonstant, statische Spannung 0,64 MP, dynamische Spannung +/- 0,38 MP), zylindrische Prüfkörper mit 10 mm Durchmesser und 10 mm Höhe.

### DIN-Abrieb: gemäß DIN 53516

Skid Eis: Die Skid-Messungen wurden auf einem British Portable Skid Tester (BPST) bei -5°C durchgeführt.

Mit sämtlichen Mischungsrezepturen wurden ferner Laufstreifenmischungen erstellt und bei der Herstellung von PKW-Reifen der Dimension 185/60 R 14 eingesetzt. Diese Reifen wurde bezüglich Schneetraktion, sowie Schneebremsen, Eisbremsen und Naßbremsen, jeweils auf einem Fahrzeug mit einem Antiblockiersystem (ABS) geprüft.

Die Ermittlung des Rollwiderstand erfolgte durch Messung des Antriebsmomentes auf einer Prüftrommel, es ist der Durchschnitt der Werte bei 60, 90, 120, 140 und 160 km/h angegeben.

Die in der Tabelle angegebenen Zahlenwerte zu den Reifenergebnissen und dem Skid Eis Test im Labor sind Kennzahlen, die sich jeweils auf das Vergleichsbeispiel, dessen Testwerte sämtlich 100 gesetzt wurden, beziehen, wobei Werte > 100 eine Verbesserung bedeuten.

Die Tabelle enthält ein Vergleichsbeispiel, sowie vier weitere Mischungsrezepturen 1, 2, 3 und 4, die gemäß der vorliegenden Erfindung erstellt wurden. In sämtlichen Mischungsbeispielen wurde ein übereinstimmender Polymerverschnitt und zwar aus Naturkautschuk und Styrolbutadiencopolymer eingesetzt.

Die Kautschukkomponente in der Mischung kann davon abweichend gewählt werden, enthält aber mindestens ein Polymer aus der Gruppe: Naturkautschuk, Polyisoprenkautschuk, Cis- oder Vinylpolybutadienkautschuk, Styrolbutadienkautschuk (in Emulsion oder in Lösung hergestellt) oder Gemische auch aus diesen, wobei ferner Zusätze von Butylkautschuk, Halobutylkautschuk oder 3,4-lsoprenkautschuk möglich sind. Mit Ausnahme von Ruß besteht auch bei den übrigen Mischungsbestandteilen im Anteil Übereinstimmung. Die Kautschukmischungen enthielten weiters die üblichen Mengen an Alterungsschutzmittel, Vulkanisationschemikalien, Zinkweiß, Stearinsäure, Verarbeitungshilfsmittel, Schwefel und dergleichen. Die Mischungsbeispiele 1 bis 4, die als Mischungsbestandteil Keratin enthielten, hatten einen etwas geringeren Rußanteil als das Vergleichsbeispiel. Erwähnt sei ferner, daß in der Kautschukmischung als Füllstoff nicht nur Ruß sondern auch Ruß gemeinsam mit anderen Füllstoffen, insbesondere Kieselsäure, eingesetzt werden kann. Dabei kann ferner anstelle von Ruß nur Kieselsäure enthalten sein. Dem Mischungsbeispiel 1 wurden Schweineborsten in einer Länge von 5 bis 80 mm und in einem Anteil von 10 Gewichtsteilen, den Mischungsbeispielen 2 und 4 Hornmehl mit uneinheitlicher Teilchengröße von ca. 100 bis 1500 µm, dem Mischungsbeispiel 3 Schafwolle beigemengt.

Aus den Labortests lassen sich über die ermittelte Rückprallelastizität bereits Verbesserungen des Rollwiderstandes erwarten, was sich dann durch die Reifentests auch bestätigt hat.

Die Ergebnisse aus den Reifentests zeigen, daß die Reifen mit erfindungsgemäßen Laufstreifenmischungen gegenüber jenem Reifen, dessen Laufstreifenmischung gemäß dem Vergleichsbeispiel erstellt war, insbesondere was Schneetraktion und das Bremsverhalten auf Eis und Schnee betrifft, deutlich verbessert sind.

**Tabelle 1:**

| **Zusammensetzung** | **Vergleich** | **1** | **2** | **3** | **4** |
|---|---|---|---|---|---|
| NR | 70 | 70 | 70 | 70 | 70 |
| SBR (Buna SL704) | 30 | 30 | 30 | 30 | 30 |
| HAF-Ruß (N234) | 74 | 64 | 70 | 64 | 72 |
| Mineralöl | 40 | 40 | 45 | 46 | 41 |
| Alterungsschutzmittel | 4 | 4 | 4 | 4 | 4 |
| Zinkweiß | 2 | 2 | 2 | 2 | 2 |
| Stearinsäure | 3 | 3 | 3 | 3 | 3 |
| TBBS (Beschleuniger) | 1,8 | 1,8 | 1,8 | 1,8 | 1,8 |
| Schwefel | 1,8 | 1,8 | 1,8 | 1,8 | 1,8 |
| Schweineborsten (5 - 80 mm) | | 10 | | | |
| Hornmehl (100 - 1500 µm) | | | 10 | | 4 |
| Schafwolle (5 - 120 mm) | | | | 20 | |
| Shore Härte RT | 63 | 64 | 62 | 61 | 63 |
| 70°C | 61 | 63,5 | 61,5 | 59 | 62 |
| -10°C | 72,5 | 71,5 | 70 | 70,5 | 72 |
| Rückprallelastizität RT | 31 | 38 | 38 | 32 | 33 |
| 70°C | 45 | 54 | 55 | 51 | 48 |
| Skid Eis (BPST -5°C % zu Vergleich) | 100 | 106 | 101 | 106 | 101 |
| E' (-20°C) | 29,5 | 19,6 | 20,7 | 19,7 | 20,1 |
| tan delta (10°C) | 0,34 | 0,27 | 0,32 | 0,25 | 0,33 |
| DIN-Abrieb | 94 | 126 | 98 | 132 | 96 |

| **Reifenergebnisse** | | | | | |
|---|---|---|---|---|---|
| Schneetraktion | 100 | 107 | 115 | 118 | 104 |
| Schneebremsen ABS | 100 | 100 | 103 | 103 | 101 |
| Eisbremsen ABS | 100 | 104 | 102 | 105 | 102 |
| Naßbremsen ABS | 100 | 96 | 96 | 98 | 100 |
| Rollwiderstand (rating) | 100 | 110 | 112 | 105 | 102 |

## Patentansprüche

1. Kautschukmischung für den Laufstreifen eines Reifens, insbesondere eines Winterreifens, dadurch gekennzeichnet, daß der Kautschukmischung Keratin in Form von Fasern oder Pulver beigemengt ist.

2. Kautschukmischung nach Anspruch 1, dadurch gekennzeichnet, daß der Anteil an Keratin 1 bis 30 Gewichtsteile, insbesondere 3 bis 25 Gewichtsteile, bezogen auf 100 Gewichtsteile Kautschuk in der Mischung, beträgt.

3. Kautschukmischung nach Anspruch 1 oder Anspruch 2, dadurch gekennzeichnet, daß die Keratinfasern Wollfasern, Haare, insbesondere Tierhaare, oder Tierborsten sind.

4. Kautschukmischung nach Anspruch 1 oder Anspruch 2, dadurch gekennzeichnet, daß die Keratinfasern solche sind, die aus natürlichen Keratinen, beispielsweise Woll- und Haarfasern, durch Verspinnen nach dem Naßspinnverfahren hergestellt sind.

5. Kautschukmischung nach einem der Ansprüche 1 bis 4, dadurch gekennzeichnet, daß die Länge der Keratinfasern vor dem Beigeben zur Mischung 0,5 bis 100 mm beträgt.

6. Kautschukmischung nach einem der Ansprüche 1 bis 5, dadurch gekennzeichnet, daß Keratinfasern mit einem Durchmesser ≤ 400 µm beigemengt sind.

7. Kautschukmischung nach Anspruch 1 oder Anspruch 2, dadurch gekennzeichnet, daß das Keratinpulver Hornmehl ist.

8. Kautschukmischung nach Anspruch 7, dadurch gekennzeichnet, daß Hornmehl mit einer Teilchengröße von 50 bis 1500 µm beigemengt wird.

9. Reifen, insbesondere Winterreifen, dessen Laufstreifen zumindest zum Teil aus einer Kautschukmischung nach einem oder mehreren der Ansprüche 1 bis 8 besteht.
